# EUROPÄISCHE PATENTSCHRIFT

(11) **EP 3 784 949 B1**
(45) Veröffentlichungstag und Bekanntmachung des Hinweises auf die Patenterteilung: **23.11.2022**
(21) Anmeldenummer: 18792369.3
(22) Anmeldetag: 21.09.2018
(51) Int. Cl.: F16L 55/163

(54) **ENDSTOPFEN FÜR LINERSYSTEME**
END STOPPER FOR LINER SYSTEMS
BOUCHON D'EXTRÉMITÉ CONÇU POUR DES SYSTÈMES DE REVÊTEMENT

(30) Priorität: 22.09.2017 DE 102017122041
(43) Veröffentlichungstag der Anmeldung: 03.03.2021
(73) Patentinhaber: Müller, Dirk, 72218 Wildberg (DE)
(72) Erfinder: Müller, Dirk, 72218 Wildberg (DE)
(74) Vertreter: Limbeck, Achim
(86) Internationale Anmeldenummer: PCT/DE2018/100802
(87) Internationale Veröffentlichungsnummer: WO 2019/057248

(56) Entgegenhaltungen:
- EP-A1- 0 899 493
- EP-A1- 1 447 609
- DE-A1- 19 739 006
- US-A- 5 049 003

## Beschreibung

### Technisches Gebiet

Die vorliegende Erfindung betrifft einen Endstopfen für Linersysteme (nachstehend auch als Packer bezeichnet) nach dem Obersatz des Patentanspruchs 1. Als Endstopfen seien nachstehend gleichermaßen Endhülsen, Abschluss- oder auch Verschlussstopfen und Verschlusshülsen verstanden.

### Stand der Technik

Packer dienen der Rohr- und Kanalsanierung und umfassen in der Regel eine zwischen zwei Endstopfen angeordnete und mit einem Druckmittel beaufschlagbare Hülle zur Aufnahme eines Liners oder dergleichen, wobei die Hülle am Umfang der Endstopfen reversibel anordbar ist. Nach dem Stand der Technik bekannte Endstopfen dieser Packer sind nach ihrem Gebrauch sehr mühsam und umständlich mittels geeigneter Werkzeuge (bspw. mittels eines Winkelschleifers) herauszutrennen.

Aus der DE 197 39 006 A1 ist ein Muffenprüfgerät bekannt, das sich aus mehreren in seinem Querschnitt teilring- und/oder teilrohrförmig ausgebildeten und sich von außen nach innen verjüngend ausgeformten Profilteilen zusammensetzt, wobei mindestens ein Profilteil eine sich von innen nach außen verjüngende Ausbildungsform aufweist und die Profilteile an ihren Rändern kraft- und/oder formschlüssig aneinander liegen.

Aus der EP 0 899 493 A1 ist ferner ein Dichtring bekannt, der als Endstopfen für Linersysteme für die Rohr- und Kanalsanierung mit einem zwischen zwei Endstopfen angeordneten und mit einem Druckmittel beaufschlagbaren Liner ausgebildet ist und der am Umfang des Endstopfens reversibel anordbar ist.

### Darstellung der Erfindung

Der vorliegenden Erfindung liegt die Aufgabe zu Grunde, einen Endstopfen zu schaffen, welcher die vorgenannten Probleme ausräumt und die Installation erleichtert und die Belastung der Verarbeiter minimiert.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Endstopfens sind in den abhängigen Unteransprüchen angegeben.

Der erfindungsgemäße Endstopfen setzt sich in seinem Querschnitt aus mehreren teilring- und/oder teilrohrförmig ausgebildeten und sich von außen nach innen verjüngenden ausgeformten Profilteilen zusammen, wobei mindestens ein Profilteil eine sich von innen nach außen verjüngende Ausbildungsform aufweist, wobei die Profilteile an ihren Rändern kraft- und/oder formschlüssig aneinander liegen.

Erfindungsgemäß ist ein Endstopfen der eingangs genannten Art dadurch gekennzeichnet, dass er mindestens ein die durch die ring- oder rohrförmig ausgebildeten Profilteile gebildete Öffnung verschließbares Deckelteil umfasst, welches reversibel und kraft- und/oder formschlüssig an den Profilteilen anordbar ist.

### Kurzbeschreibung der Zeichnungen

Weitere Ziele, Merkmale, Vorteile und Anwendungsmöglichkeiten des erfindungsgemäßen Endstopfens ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig. 1 den erfindungsgemäßen Endstopfen in der Rückansicht;

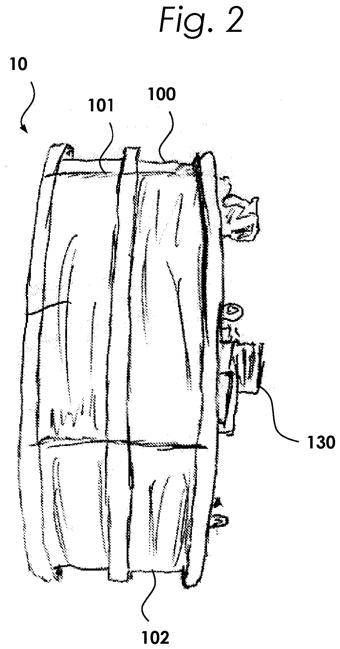

Fig. 2 den Endstopfen in der Seitenansicht;

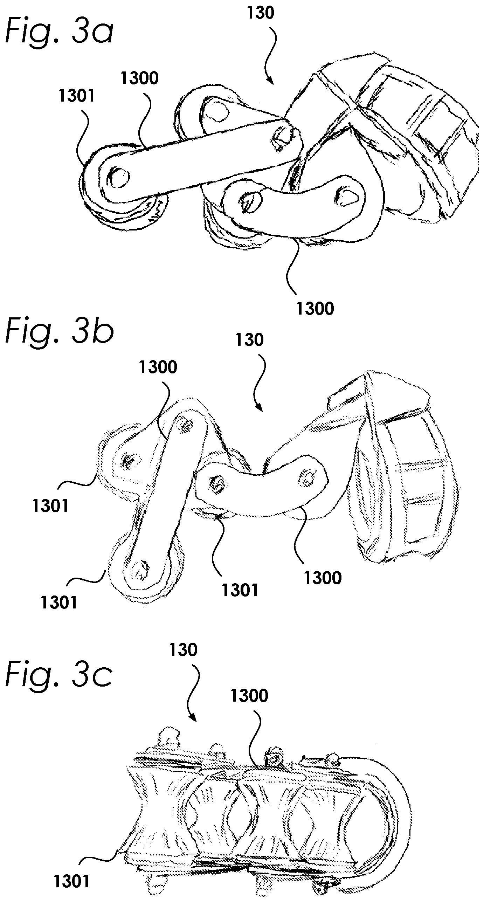

Fign. 3a-3c die Umlenkungsrolleneinheit in verschiedenen Perspektiven.

### Ausführung der Erfindung

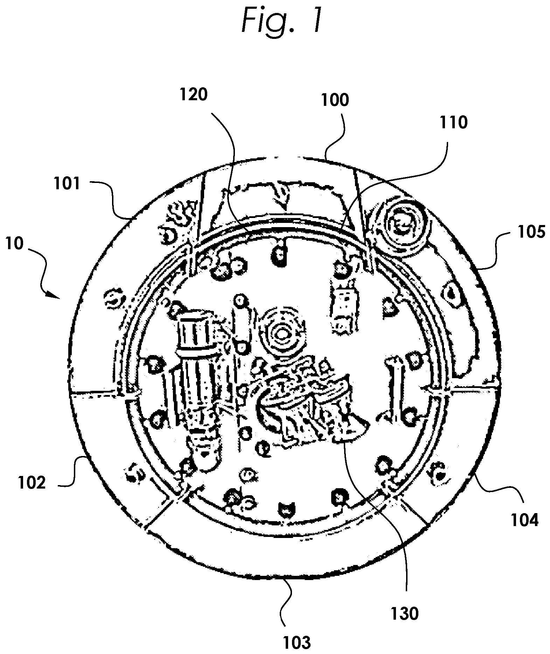

Wie aus Fig.1 ersichtlich, ist der Endstopfen 10 in Modulbauweise aus mehreren Profilteilen 100, 101, 102, 103, 104, 105 gebildet, die vorzugsweise aus Leichtmetall (bspw. aus hochfestem Aluminium) hergestellt sind. Darüber hinaus ist aber auch die Verwendung von Kunststoffen, Verbundstoffen sowie deren Kombination möglich. Der Endstopfen 10 besteht aus dem Korpus und dem Deckelteil 120 mit Anbauteilen. Somit wird das Gewicht auf mehrere Teile verteilt. Durch die geringere Dichte als Stahl sind leichtere Gewichte möglich. Durch die Modulbauweise ist das komplette Konstrukt sehr stabil.

Wie aus Fig. 1 ersichtlich, liegen die Profilteile 100, 101, 102, 103, 104, 105 an ihren Rändern kraft- und/oder formschlüssig aneinander und sind vorzugsweise untereinander über die Dichtflächen mittels Verbindungsmitteln reversibel aneinander befestigbar und/oder mittels Scharniertechnik zusammenklappbar. Das komplette Einbauprofil des Endstopfens 10 wird somit über diese Profilteile 100, 101, 102, 103, 104, 105 realisiert, wodurch der gesamte Korpus des Endstopfens 10 somit in sich sehr stabil ausgebildet ist.

Die Profilteile 100, 101, 102, 103, 104, 105 sind hierzu weiterhin vorzugsweise mit Klemmbolzen, Handgriffen, Führungsplatten, Anschlüssen, Zugösen und Dichtflächen ausgestattet.

Der Endstopfen 10 umfasst weiterhin mindestens ein die durch die ring- oder rohrförmig ausgebildeten Profilteile gebildete Öffnung 110 verschließbares Deckelteil 120, welches reversibel und kraft- und/oder formschlüssig an den Profilteilen 100, 101, 102, 103, 104, 105 anordbar ist.

Überdies ist es vorteilhaft, wenn die Profilteile 100, 101, 102, 103, 104, 105 zur Bildung einer rohrförmigen Wandung des Endstopfens 10 zur Aufnahme der Hülle ausgebildet sind.

Um einen Liner mit dem Packer einbinden zu können wird dieser ohne Deckelteil 120 vorzugsweise mit Spann- und/oder Klemmelementen zusammengefügt. Dabei dürfen die auf den Korpus liegenden Spannkräfte diesen nicht verformen. Das Deckelteil wird nun mit Spannschlössern oder anderen Klemm- und Fügetechniken mit dem Korpus verbunden.

Auf dem Deckelteil 120 befinden sich vorzugsweise ferner Handgriffe, mindestens ein Sicherheitsventil, eine Kamerahalterung, eine Düse und eine Vorrichtungseinheit für eine vorteilhaft vorgesehene Umlenkungsrolleneinheit 130. Das Deckelteil 120 ist zusätzlich mit Verbindungselementen teilbar.

Die Umlenkungsrolleneinheit 130 besteht vorteilhafterweise aus beweglichen Seitenwangen 1300 mit Rollen 1301, die auf Achsen gelagert sind. Ferner ist vorzugsweise eine Fangrolle vorgesehen, die das Kabel oder Seil bei Entlastung in der Umlenkungsrolleneinheit 130 führen. Die Umlenkungsrolleneinheit 130 ist vorzugsweise so konzipiert, dass diese kuppelbar und somit frei drehbar ist. Durch die beweglichen Seitenwangen 1300 entsteht ein weiterer Freiheitsgrad. Die Umlenkungsrolleneinheit 130 ist auf alle am Markt befindlichen Packer adaptierbar und anwendbar.

Der Packer kann sich durch die erfindungsgemäße Ausführung der Umlenkungsrolleneinheit 130 unabhängig von der Umlenkung drehen, somit werden das Kabel und das Seil korrekt von der Düse über die Umlenkung geführt. Nach der Aushärtung muss der Packer wieder vom eingebundenen Liner getrennt werden.

Weiterhin ist in einer besonders vorteilhaften Ausführungsform eine Düsenhalterungseinheit vorgesehen, die auf einer auswechselbaren Trägerplatte angeordnet ist. Dadurch ist es möglich, für verschiedene UV-Anlagenhersteller diesen Packer zu adaptieren.

### Liste der Bezugsziffern

- 10: Endstopfen
- 100,101,102,103,104,105: Profilteile
- 110: Öffnung
- 120: Deckelteil
- 130: Umlenkrolle
- 1300: Seitenwangen
- 1301: Rollen

## Patentansprüche

1. Endstopfen (10) für Linersysteme für die Rohr- und Kanalsanierung mit einem zwischen zwei Endstopfen (10) angeordneten und mit einem Druckmittel beaufschlagbaren Liner, der am Umfang des Endstopfens (10) reversibel anordbar ist, wobei der Endstopfen (10) sich in seinem Querschnitt aus mehreren teilring- und/oder teilrohrförmig ausgebildeten und sich von außen nach innen verjüngenden ausgeformten Profilteilen (101, 102, 103, 104, 105) zusammensetzt, wobei mindestens ein Profilteil (100) eine sich von innen nach außen verjüngende Ausbildungsform aufweist, wobei die Profilteile (100, 101, 102, 103, 104, 105) an ihren Rändern kraft- und/oder formschlüssig aneinander liegen,
**dadurch gekennzeichnet, dass**
der Endstopfen (10) mindestens ein die durch die ring- oder rohrförmig ausgebildeten Profilteile gebildete Öffnung (110) verschließbares Deckelteil (120) umfasst, welches reversibel und kraft- und/oder formschlüssig an den Profilteilen (100, 101, 102, 103, 104, 105) anordbar ist.

2. Endstopfen (10) nach Anspruch 1,
**dadurch gekennzeichnet, dass**
die Profilteile (100, 101, 102, 103, 104, 105) mittels Scharniertechnik zusammenklappbar sind.

3. Endstopfen (10) nach einem der vorangegangenen Ansprüche,
**dadurch gekennzeichnet, dass**
eine Umlenkungsrolleneinheit (130) vorgesehen ist, die aus beweglichen Seitenwangen (1300) mit Rollen (1301) besteht, die auf Achsen (1302) gelagert sind.

4. Endstopfen (10) nach Anspruch 3,
**dadurch gekennzeichnet, dass**
die Umlenkungsrolleneinheit (130) so konzipiert ist, dass diese kuppelbar und somit frei drehbar ist.

5. Endstopfen (10) nach einem der vorangegangenen Ansprüche 3 und 4,
**dadurch gekennzeichnet, dass**
die beweglichen Seitenwangen (1300) derart mittels Scharniertechnik aneinander angeordnet sind, dass ein weiterer Schwenk-/ Drehfreiheitsgrad entsteht.

## Claims

1. End plug (10) for liner systems for pipe and sewer rehabilitation, with a liner which is arranged between two end plugs (10) and can be pressurised with a pressure medium and which can be arranged reversibly on the circumference of the end plug (10), the end plug (10) changing in its cross-section composed of a plurality of profile parts (101, 102, 103, 104, 105) which are partially ring-shaped and/or partially tubular and taper from the outside inwards, wherein at least one profile part (100) has a configuration which tapers from the inside to the outside, the Profile parts (100, 101, 102, 103, 104, 105) are in positive and/or positive contact at their edges,
**characterised in that**
the end plug (10) comprises at least one cover part (120) which can close the opening (110) formed by the annular or tubular profile parts and can be arranged reversibly and in a force-fitting and/or form-fitting manner on the profile parts (100, 101, 102, 103, 104, 105).

2. End plug (10) according to claim 1,
**characterised in that**
the profile parts (100, 101, 102, 103, 104, 105) can be folded together by means of hinge technology.

3. End plug (10) according to any one of the preceding claims,
**characterised in that**
a deflection roller unit (130) is provided, consisting of movable side cheeks (1300) with rollers (1301) mounted on axles (1302).

4. End plug (10) according to claim 3,
**characterised in that**
the deflector roller unit (130) is designed so that it can be coupled and thus freely rotated.

5. End plug (10) according to any one of the preceding claims 3 and 4,
**characterised in that**
the movable side panels (1300) are arranged against each other by means of hinge technology in such a way that a further degree of swivelling/rotational freedom is created.

## Revendications

1. Bouchon d'extrémité (10) pour systèmes de chemisage pour l'assainissement de tuyaux et de canalisations avec une chemise disposée entre deux bouchons d'extrémité (10) et pouvant être alimentée en un fluide sous pression, qui peut être disposée de manière réversible sur la périphérie du bouchon d'extrémité (10), le bouchon d'extrémité (10) se composant dans sa section transversale de plusieurs pièces profilées (101, 102, 103, 104, 105), au moins une pièce profilée (100) présentant une forme de réalisation se rétrécissant de l'intérieur vers l'extérieur, les pièces profilées (100, 101, 102, 103, 104, 105) étant appliquées les unes contre les autres sur leurs bords par adhérence et/ou par complémentarité de forme,
**caractérisé en ce que**
le bouchon d'extrémité (10) comprend au moins une partie de couvercle (120) pouvant fermer l'ouverture (110) formée par les parties profilées de forme annulaire ou tubulaire, qui peut être disposée de manière réversible et par adhérence et/ou par engagement positif sur les parties profilées (100, 101, 102, 103, 104, 105).

2. Bouchon d'extrémité (10) selon la revendication 1,
**caractérisé en ce que**
les pièces profilées (100, 101, 102, 103, 104, 105) peuvent être repliées au moyen d'une technique de charnière.

3. Bouchon d'extrémité (10) selon l'une quelconque des revendications précédentes,
**caractérisé en ce qu'**
une unité de poulies de renvoi (130) est prévue, qui est constituée de joues latérales mobiles (1300) avec des poulies (1301) qui sont montées sur des axes (1302).

4. Bouchon d'extrémité (10) selon la revendication 3,
**caractérisé en ce que**
l'unité de poulie de renvoi (130) est conçue de manière à pouvoir être couplée et donc à pouvoir tourner librement.

5. Bouchon d'extrémité (10) selon l'une quelconque des revendications 3 et 4 précédentes,
**caractérisé en ce que**
les joues latérales mobiles (1300) sont disposées l'une contre l'autre au moyen d'une technique de charnière de telle sorte qu'il en résulte un degré supplémentaire de liberté de pivotement/rotation.
